(19) Europäisches Patentamt
European Patent Office
Office européen des brevets

(11) Publication number: **0 273 448 B1**

# (12) EUROPEAN PATENT SPECIFICATION

(45) Date of publication of patent specification: **01.09.93**

(51) Int. Cl.$^5$: **B01D 19/04**, C08F 283/12

(21) Application number: **87119331.4**

(22) Date of filing: **29.12.87**

## (54) Silicone antifoams.

(30) Priority: **30.12.86 US 947876**

(43) Date of publication of application:
**06.07.88 Bulletin 88/27**

(45) Publication of the grant of the patent:
**01.09.93 Bulletin 93/35**

(84) Designated Contracting States:
**AT BE CH DE ES FR GB GR IT LI LU NL SE**

(56) References cited:
**EP-A- 0 163 541**
**FR-A- 2 396 577**
**US-A- 2 959 569**

(73) Proprietor: **UNION CARBIDE CORPORATION**
**39 Old Ridgebury Road**
**Danbury Connecticut 06817(US)**

(72) Inventor: **Pelton, Robert Herbert**
**Box 138 Rdl**
**Barrett Hill Mahopac New York 10541(US)**
Inventor: **Goddard, Errol Desmond**
**349 Pleasant Lane**
**Haworth New Jersey 07641(US)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-80803 München (DE)**

**EP 0 273 448 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to novel silicone antifoams, their preparation and use in the prevention of foam formations and the suppression of existing foam in liquid mediums.

Foaming may occur in many industrial processes, such as those in the chemical, food preparation or petroleum industries causing overflow of liquid-containing vessels. This can lead to clogging of overflow lines and relief valves. Furthermore, operating personnel may be exposed to hazardous liquids and vapors. Even when confined to the vessel, foams occupy volume and thereby subtract from its productive capacity.

Specific examples of foaming problems include aqueous processes, such as paper making, wood pulping and emulsion polymerization. Foaming is also a problem with processes involving liquid hydrocarbons, such as petroleum refinery processes, wellhead separation of gas from oil; general hydraulic and lubricating processes.

To avoid foaming, or ameliorate the effects of foaming, foam suppressant compositions are often added to foaming liquids, or to potentially foaming liquids. A composition added to a liquid before it foams, to prevent excessive foaming, is commonly termed an "antifoam". A composition added to destroy foam existing in a liquid, is commonly termed a "defoamer". The term "foam suppressant" composition, as used herein, encompasses both these terms.

It is known to add small amounts of various silicone compositions to either aqueous liquids or hydrocarbon liquids to suppress foam.

US-A-3,445,839 discloses an aqueous defoaming composition consisting essentially of a polydimethylsiloxane fluid, and a silica aerogel.

US-A-3,691,091 discloses a silicone emulsion for defoaming aqueous liquids, in which the silicone consists essentially of a polydimethylsiloxane fluid, silica, and an organosilicon compound or oligomer containing alkoxy and/or silanol groups.

US-A-4,082,690 discloses a silicone composition, useful for reducing foam in non-aqueous liquids, consisting essentially of a polydimethylsiloxane, and a hydrocarbon solvent.

US-A-4,486,336 discloses the use of mixtures of high and low viscosity silicone oils and polydimethyl siloxane fluids which are compatible with mineral oils.

Other foam suppressant compositions are directed to both aqueous liquids and hydrocarbon liquids. To be useful in both said liquids, it is desirable that a foam suppressant composition be stable upon emulsification, and also stable upon dispersion in a hydrocarbon solvent, in order to facilitate foam suppression.

US-A-4,145,308 discloses foam suppressant compositions, useful in both aqueous and hydrocarbon liquids, consisting essentially of a polydimethylsiloxane, and fumed or precipitated silica.

US-A-3,383,327 discloses a foam control agent prepared from a polydiorganosiloxane fluid, silica, and an hydroxylated polydimethylsiloxane.

Vinyl polymerization in silicone-containing media is known, as shown by, for example, GB-A-1,337,022 which discloses the use of silicone block copolymers as stabilizers for vinyl polymerizations in alkane solvents.

US-A-3,555,109 discloses the preparation of dispersions by polymerization in low viscosity (<6000 $mm^2/s$ (cSt)) silicone oils.

US-A-4,468,491 discloses the preparation of foam suppressants made by free radical grafting of polyethers onto siloxanes in the presence of vinyl monomer.

EP-A-163 541 describes the preparation of a silicone defoamer composition wherein the catalyst which promotes the reaction of the silicon compounds used for said purpose is preferably selected from alkali metal hydroxides, alkali metal silanolates, alkali metal alkoxides and metal salts of organic acids.

US-A-2,959,569 discloses a method of preparing organosilicon graft polymers wherein a finely divided inorganic solid having a particle size of from 0.005 to 5 $\mu m$ (e.g. silica) is dispersed in a mixture of an organopolysiloxane and an olefinic compound and the resulting dispersion is subjected to conditions under which free radicals are formed.

The resulting products are reported to be useful as lubricants, surfactants, hydraulic fluids, electrical insulation and "for other uses for which organosilicon compounds have become widely known".

While the prior art does produce foam suppressant compositions, certain problems remain. Relatively high silica levels, chemical treatment of the silica, and relatively high resin contents tend to increase the cost of manufacture of these compositions. Moreover, the durability of conventional antifoams is less than satisfactory, requiring its frequent addition during continuous processing. Continuous monitoring of the system for foam formation is therefore required.

It is therefore an object of the present invention to provide effective, durable and economical foam suppressant compositions and methods for their manufacture. It is a further object of the present invention to provide a satisfactory method for the suppression of foam formation in industrial processing.

The present invention provides foam suppressant compositions produced through free-radical polymerization of mixtures of polydiorganosiloxanes, at least one free radical initiator, silica, and optionally, pendant vinyl modified silicone oil, and/or vinyl monomer(s), followed by dilution of the resulting high viscosity reaction product with a relatively low viscosity polysiloxane.

The present invention further provides processes for the production of the foam suppressants and the suppression of foams through their use.

In accordance with the present invention, foam suppressant compositions are produced through free-radical polymerization of mixtures of polydiorganosiloxanes, at least one free radical initiator, silica, and, optionally, pendant vinyl-modified silicone oil and/or vinyl monomer(s), followed by dilution of the resulting high viscosity reaction product with a relatively low viscosity polydiorganosiloxane.

The polydiorganosiloxanes which participate in the free-radical polymerization are essentially linear and may be represented by the formula

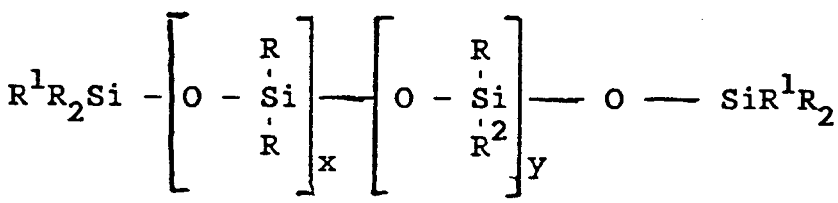
(I)

wherein R represents an alkyl group having from 1 to about 6 carbon atoms; $R^1$ represents a hydrogen atom, a hydroxyl group, an alkyl group having from 1 to 16 carbon atoms, an epoxy group having from 2 to 16 carbon atoms or the group $-OR^3$ wherein $R^3$ represents an alkyl group having from 1 to 16 carbon atoms, an arylalkyl group having from 7 to 23 carbon atoms or $-OR^3$ may be a polyoxyalkylene group having a molecular weight of from 50 to 5000; $R^2$ represents an alkyl group having from 1 to 16 carbon atoms, a phenyl group, a hydrogen atom, an alkyl-substituted phenyl group wherein the alkyl group contains from 1 to 6 carbon atoms, an epoxy group having from 2 to 16 carbon atoms, or a polysiloxane group having a molecular weight of from 100 to 10,000; $y$ is an integer ranging from 0 to 10,000; and the sum of $x$ and $y$ ranges from 500 to 10,000.

Preferably R, $R^1$ and $R^2$ are methyl groups, $x$ is an integer ranging from 600 to 4000, and $y$ is 0. More preferably, R, $R^1$ and $R^2$, are methyl groups and $x$ ranges from 800 to 2000.

The above-described polydiorganosiloxanes are included in amounts, based upon the total weight of the non-optional reactants (before final dilution), of from 80 to 98 wt. %. Preferably, the polyorganosilanes are employed in amounts of from 85 to 95 wt. %. Most preferably, about 90 wt. % of the polyorganosilane is employed.

The silica component of the present invention is comprised of amorphous silica, such as commercially available from numerous sources, such as Tulco, Inc. of Ayer, MA.

The amorphous silica which may be employed in the present invention has a surface area of from $50m^2/g$ to $400m^2/g$ and the majority of the silica particles possess a particle size less than 100 $\mu m$ as determined by the Hegman Gauge. More preferably, the silica has a surface area from $100m^2/g$ to $300m^2/g$ and a particle size less than 50 $\mu m$ as determined by the Hegman Gauge. Amorphous silica is available in three main types, classified according to the method of its manufacture. These three types are silica gel, fumed silica, and precipitated silica, all of which may be employed in the practice of the present invention if the above-outlined criteria are met.

Silica gel is manufactured by acidifying an aqueous solution of sodium silicate, which causes the formation of an $SiO_2$ gel. This $SiO_2$ gel is mechanically pulverized. Salts and acids are then removed by washing. The material is then dried.

Fumed silica is obtained by condensing vapors of $SiO_2$. $SiO_2$ vapors can be generated by heating crystalline $SiO_2$, such as high purity quartz, passing crystalline $SiO_2$ into a high temperature plasma arc, or most commonly, the $SiO_2$ vapors can be produced by reacting $SiCl_4$ and $H_2$ with $O_2$.

Precipitated silica can be produced by chemically destabilizing an aqueous solution of sodium silicate. A fine precipitate is formed upon chemical destabilization, and said precipitate is subsequently washed and dried.

The amorphous silica used in the compositions of the present invention can further be prehydrophobized such as, for example, with silicone oil, trimethylchlorosilane or hexamethyldisilazane.

While any amorphous silica having the required surface area and particle size can be used to form the compositions of the present invention, the use of prehydrophobized fumed silica having a surface area of from 100 to 300 $m^2/g$ and particle sizes of less than 50 μm as determined by the Hegman Gauge is preferred.

Amorphous silica is present from 0.10% to 30%, by weight, based on the total weight of the non-optional reactants (before final dilution). More preferably, the silica component is present from 0.1% to 10%, by weight, based on the total weight of the non-optional reactants. Most preferably, the silica component is present from 2.0% to 4.0% by weight, based on the total weight of the non-optional reactants (before final dilution).

In a preferred embodiment of the present invention, pendant vinyl-modified silicone oil is also present in the reaction medium prior to free-radical polymerization. It has been found that its presence in the amounts described below produces highly uniform foam suppressants. This material may be represented as follows:

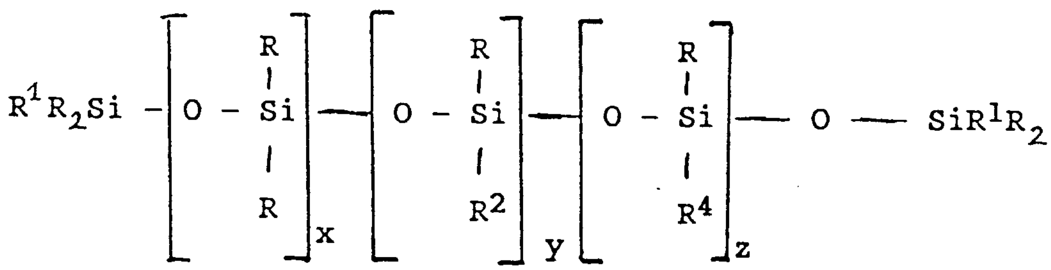

(II)

wherein R represents an alkyl group having from 1 to 6 carbon atoms; $R^1$ represents a hydrogen atom, a hydroxyl group, an alkyl group having from 1 to 16 carbon atoms, an epoxy group having from 2 to 16 carbon atoms or the group $-OR^3$ wherein $R^3$ represents an alkyl group having from 1 to 16 carbon atoms, an arylalkyl group having from 7 to 23 carbon atoms or $-OR^3$ may be a polyoxyalkylene group having a-molecular weight of from 50 to 5000; $R^2$ represents an alkyl group having from 1 to 16 carbon atoms, a phenyl group, a hydrogen atom, an alkyl-substituted phenyl group wherein the alkyl group contains from 1 to 6 carbon atoms, an epoxy group having from 2 to 16 carbon atoms, or a polysiloxane group having a molecular weight of from 100 to 10,000; $R^4$ represents a vinyl group containing from 2 to 24 carbon atoms; $y$ is an integer ranging from 0 to 10,000; $z$ is an integer ranging from 1 to 400; and the sum of $x$, $y$ and $z$ ranges from 500 to 10,000.

Preferably R and $R^1$ are methyl groups, $x$ is an integer ranging from 3,000 to 10,000, $y$ is 0 and $z$ is an integer ranging from 5 to 25. More preferably, R and $R^1$ are methyl groups; $x$ has a value of from 5,000 to 8,000, $y$ is zero and $z$ has a value of from 5 to 20. Most preferably, R and $R^1$ are methyl groups, $y$ is zero, $x$ has a value of from 6,000 to 8,000 and $z$ has a value of about 14.

The above-described pendant vinyl-modified silicone oil is included in the reaction medium in amounts, based upon the total weight of the previously described non-optional reactants, ranging from about 1 to 20 wt %. Preferably, it is included in amounts ranging from 2 to 10 wt. %. Most preferably, it is present in an amount of 5 wt.

Vinyl monomer(s) which may optionally be employed in accordance with the instant invention are exemplified in the following list.

Olefins, such as ethylene, propylene and isobutylene; vinyl esters of aliphatic or aromatic carboxylic acids, preferably vinyl acetate, vinyl propionate, a,β-unsaturated mono- or dicarboxylic acid and its derivatives, (meth)acrylic acid, methyl (meth)acrylate, ethyl (meth)acrylate, propyl or isopropyl (meth)-acrylate, n-butyl, iso-butyl or tert.-butyl (meth)acrylate, 2-ethyl-hexyl(meth)acrylate, (meth)acrylamide, N-alkyl-substituted (meth)acrylamide derivatives, (meth)acrylonitrile, maleic anhydride, maleic acid amide, N-alkyl-maleimide, maleic acid half esters or diesters, vinyl aromatics, such as styrene, alpha-methylstyrene, and 4-chloro-styrene, vinyl chloride, vinylidene chloride, vinylidene fluoride, tetrafluoroethylene, vinyl ethers, such as ethyl vinyl ether or n-butyl vinyl ether; allyl compounds, such as allyl alcohol, allyl acetate, isobutene diacetate, 2-methylenepropane-1,3-diol, allyl ethyl carbonate and allyl phenyl carbonate; and mixtures thereof.

Vinyl acetate and methyl methacrylate are preferably used. Most preferred is methyl methacrylate.

If crosslinking or an increase in the molecular weights of the vinyl material is desired, divinyl compounds or diallyl compounds may also be employed. Divinyl benzene, (meth)acrylates of polyhydric

alcohols, such as, for example, ethylene glycol dimethacrylate and diethyleneglycol diacrylate, and divinyl ether may be used.

The vinyl monomer(s) are present in amounts ranging from about 0 to 20 wt. %, based upon the total weight of the non-optional reactants. Preferably, they are present in amounts ranging from about 0 to 10 wt. %. Most preferably, they are present in an amount of about 5 wt. %.

The free-radical polymerization can be initiated in any known manner, such as with the aid of free-radical formers; UV radiation; or alpha-, beta- or gamma-radiation, or thermally, without further additives. The radiation-initiated polymerization may also be carried out in the presence of sensitizers, as taught in, for example, Jenkins, A. Ledwith, Reactivity, Mechanism and Structure in Polymer Chemistry, John Wiley & Son, London, New York, 1974, page 465.

To initiate the free-radical polymerization, free-radical formers are employed in amounts from 0.0001 (e.g. 0.001) to 2, preferably from 0.02 to 0.8, % by weight, relative to the total weight of the non-optional reactants. Examples of free-radical formers which may be employed are azo initiators, such as azo esters, azo-imino esters or azo-N-alkylamides, peroxides, such as di-tert-butyl peroxide, dicumyl peroxide, or di-benzoyl peroxide, per-esters, such as amyl perpivalate, tert-butyl perpivalate, tert-butyl peroctoate, t-butyl perbenzoate, or tert-butyl perneodecanoate, percarbonates, such as cyclohexyl percarbonate or diisopropyl percarbonate, or hydroperoxides such as, for example, cumyl hydroperoxide or tert-butyl hydroperoxide.

Suitable initiators also include benzopinacol and benzopinacol derivatives, or other thermally unstable, highly substituted ethane derivatives.

The polymerization can also be initiated at lower temperatures than those corresponding to the thermal decomposition temperatures of the free-radical formers with the aid of redox systems.

Examples of redox initiators which may be employed are combinations of peroxides and amines, such as, for example, benzoyl peroxide and triethylamine, trialkylboron compounds and oxygen, hydroperoxides and sulphinic acids, formaldehyde or aldoses, or combinations containing low-valent transition metal salts and sulphur dioxide/peroxide redox systems.

The polymerization reaction can be carried out continuously or discontinuously, under atmospheric pressure or under reaction pressures up to, for example, 30 MPa (300 bar), preferably up to 1.5 MPa (15 bar), at reaction temperatures between -20°C and +250°C, preferably from 70° to 190°C. Thorough mixing, as referred to herein, can be accomplished by high shear mechanical mixers, such as high intensity mixers and colloid mills.

Heat may be applied to the completed mixture of components or the components may be introduced to the mixture as heat is applied. The elevated reaction temperature should be maintained for from about 30 seconds to about 3 hours.

While the heating and mixing steps can be performed sequentially, or simultaneously, it is preferred that the components be first thoroughly mixed, and then heated with high shear mixing.

The total polymerization reaction including the time during which heat, if employed, is applied, is typically carried out for between about 30 seconds to about 8.3 hours. Preferably, it is carried out for between about 5 to about 60 minutes.

If desired, the polymerization can also be carried out in the presence of solvents or diluents, water, alcohols, such as methanol, ethanol and tert-butanol, aliphatic or aromatic hydrocarbons, halohydrocarbons, such as chlorobenzene or fluorinated compounds, ethers, such as dioxane or tetrahydrofuran, and esters, such as, for example, ethyl acetate, but the polymerization is preferably carried out in the absence of a solvent.

If desired, the polymerization reaction may also be carried out in the presence of molecular-weight regulators. Mercaptans, such as n- or tert-dodecylmercaptan, thioglycol, thioglycerol or thioacetates may be employed as regulators. Furthermore, sulphur-free molecular-weight regulators can be used, such as hydrocarbons examples which include paraffin fractions, such as, for example, petroleum ether, light naphtha, alpha-olefins, such as, for example, propylene, isobutylene or but-1-ene, and ketones, such as acetone, methyl ethyl ketone or cyclohexanone and aldehydes, such as formaldehyde, acetaldehyde, propionaldehyde or isobutyraldehyde, or allyl compounds, such as allyl alcohol, allyl acetate, isobutene diacetate or allyl carbonates. Further suitable telogens, such as halohydrocarbons including for example methylene chloride, tetrachloroethane, dibromoethane, may be employed.

Although reaction products which are useful in the practice of the instant invention may have rubber-like consistencies and therefore viscosities approaching infinity, the reaction product typically possesses a viscosity of between 50,000 and 5,000,000 $mm^2/s$ (cSt). However, utility as an antifoam requires a viscosity of between 100 and 10,000 $mm^2/s$ (cSt); preferably between 4,000 and 8,000 $mm^2/s$ (cSt). Thus, to achieve the required viscosity, the reaction product must be diluted with appropriate quantities of polysiloxanes, including those of formula (I), having viscosities of between 5 and 500 $mm^2/s$ (cSt). Preferred for this

purpose are polysiloxanes which possess viscosities of between 50 and 150 $mm^2/s$ (cSt). Optional solvents and oils, as described below, may also serve as viscosity lowering diluents.

Optional, non-essential ingredients can be included in the compositions of the present invention, provided they do not adversely affect the foam suppressing activity of the compositions of the present invention. Examples of such ingredients include, but are not limited to, dyes, sterilants, mineral oil, kerosene, solvents, compatabilizing agents such as those described in US-A-4,519,319, and antibacterial preparations. The amounts of such optional, non-essential ingredients are not taken into account as part of the total weight of the claimed composition, either in ascertaining the respective percentages of its components, or in determining the amount of foam suppressant composition of the present composition to be added to a liquid.

The foam suppressant composition of the present invention is added to a liquid medium in an amount such that existing foam or the formation of foam will be suppressed. The amount necessary for this purpose can vary from 0.5 ppm, to 200 ppm of composition. The specific amount added is determined by the stability of the foam to be suppressed. Typically, an amount of foam suppression composition from 25 ppm to 100 ppm is sufficient. Additional quantities of the claimed composition may be required.

Whereas the exact scope of the instant invention is set forth in the appended claims, the following specific examples illustrate certain aspects of the present invention and, more particularly, point out methods of evaluating the same. However, the examples are set forth for illustration only and are not be construed as limitations on the present invention except as set forth in the appended claims. All parts and percentages are by weight unless otherwise specified.

## EXAMPLES

### Example 1

Antifoam preparations were conducted with a N-50 Hobart mixer fitted with a custom made Plexiglass top. A rubber gasket formed a seal between the top and a Hobart 4.5 L stainless steel mixing bowl. Nitrogen was introduced through a line connected to one hole in the top and a second hole served as both a nitrogen vent and as an addition port for introduction of vinyl monomer. A standard Hobart paddle was fitted with Teflon™ blades formed to fit the contours of the mixing bowl. The bowl was heated with a heating mantle and the temperature was controlled with a Cole Parmer Dyna-sense™ temperature controller. The thermocouple for the temperature controller was placed in the drain hole of the mixing bowl.

To a Hobart mixing bowl containing 250 g of 60,000 $mm^2/s$ (cSt) silicone oil and 27 g heptane was added 8 g hydrophobic fumed silica marketed as Tullanox™ 500 (Tulco Inc., Ayer, MA). The mixture was placed in the Hobart mixer and heated to 70 °C under nitrogen. Thirty minutes after coming to temperature, 0.7 g benzoyl peroxide was added and mixed for ten minutes. 15 g of freshly distilled methyl methacrylate was then added, via a dropping funnel, over a period of ten minutes and the mixture was stirred for an additional three hours to give a very viscous elastic composition. A pourable hazy product, hereinafter referred to as AF1, was obtained after the addition of 400 g of 50 $mm^2/s$ (cSt) silicone oil.

Antifoam compounds were emulsified for evaluation by foam rise tests in aqueous media by the following procedure. The emulsifier concentrate was prepared by melting a mixture containing 170 g Span™ 60 and 130 g of Myri™ 52S in a Hobart mixer. Hot water in an amount of 300 g was slowly added to the mixer to form an emulsifier paste. A 250 mL plastic beaker containing 32.2 g AF1, 17.4 of the emulsifier concentrate, 49.55 g water, 0.6 g poly(sodium acrylate) thickener, marketed as Acrysol ASE 60 (Rohm and Haas), 0.15 g 20% NaOH, and 0.1 g of an antibacterial agent, marketed as Givguard, was mixed with a propeller stirrer at room temperature for about 30 minutes to give an oil-in-water emulsion with an active solid content of 30 percent. The pH of the emulsion was adjusted to 8 with NaOH as required. Microscope inspection revealed a coarse emulsion with most droplets having diameters within the range of 1 to 20 µm.

Antifoam tests were conducted as follows. Antifoam emulsion was weighed into 250 mL of freshly prepared 0.5% w/v aqueous sodium dodecyl sulfate, hereinafter SDS, (BDH 44215 "specially purified grade for biochemical work") which was added to a 1 liter graduated cylinder. Humidified nitrogen was introduced via an Ace Glass Pore C, ASTM 25-50 µm glass frit attached to a glass tube and suspended down through the center of the cylinder. The gas flow rate was regulated at 0.42 standard liters per minute. Foam and liquid heights were recorded as a function of time and results for AF1 are given in Table 1.

TABLE 1

| Foam heights as a function of time for 100 ppm (active solids) AF1 in 0.5% SDS. | | |
|---|---|---|
| TIME (s) | FOAM VOLUME (mL) | |
| | AF 1 | no antifoam* |
| 10 | 35 | 110 |
| 100 | 40 | 840 |
| 1000 | 65 | >900 |
| 10000 | 190 | >900 |
| 20000 | 300 | >900 |

* 900 mL was approximately the greatest volume of foam which could be measured in the foam rise apparatus.

Example 2

AF2 was prepared by exactly the same procedure as AF1 in Example 1 except that no methyl methacrylate was added. Results are set forth in Table 1A.

The foam testing results in Table 1 reveal that initial foam control of AF2 was comparable to that of AF1; however, the outstanding durability of AF1 was not observed with AF2.

TABLE 1A

| TIME (s) | FOAM VOLUME (mL) |
|---|---|
| 10 | 25 |
| 100 | 35 |
| 1000 | >525 |
| 10000 | >900* |
| 20000 | >900* |

Example 3

The composition and procedures described in Example 1 were repeated with the following changes, thereby producing AF3. The amount of fumed silica added was doubled to 16 g and the 50 $mm^2/s$ (cSt) silicone oil was added 1.5 hours after the methyl methacrylate addition. Foam rise data are given in Table 2.

TABLE 2

| Foam heights as a function of time for 100 ppm (actives) AF3 in 0.5% SDS. | |
|---|---|
| TIME (s) | FOAM VOLUME (mL) |
| 10 | 35 |
| 100 | 45 |
| 1200 | 55 |
| 2400 | 70 |

Example 4

The composition and procedures described in Example 1 were repeated with the exception that the amount of methyl methacrylate was doubled to 32 g. Foam rise results for the product, herein designated AF4, are summarized in Table 3.

TABLE 3

| Foam heights as a function of time for two concentrations of AF4 in 0.5% SDS. | | |
|---|---|---|
| TIME (s) | FOAM VOLUME (mL) | |
| | 60 ppm | 100 ppm |
| 10 | 40 | 40 |
| 700 | 55 | 45 |
| 2600 | 75 | 45 |
| 6200 | - | 65 |

Example 5

AF5 was prepared with undistilled vinyl acetate in place of methyl methacrylate using the procedures described in Example 1. Foam rise data shown in Table 4 indicate that the product, AF5, was a very potent antifoam in 0.5% SDS.

TABLE 4

| Foam heights as a function of time for 60 ppm AF5 in 0.5% SDS. | |
|---|---|
| TIME (s) | FOAM VOLUME (mL) |
| 10 | 60 |
| 100 | 95 |
| 1000 | 140 |
| 2000 | 180 |
| 4000 | 230 |

Example 6

Hydrophilic silica marketed as Cab-O-Sil HS-5™ (Cabot Chem. Corp.) was used instead of fumed silica to prepare AF6 by the procedure described in Example 1. Results of antifoam testing are given in Table 5.

TABLE 5

| TIME (s) | FOAM VOLUME (mL) | |
|---|---|---|
| | 100 ppm | 50 ppm |
| 10 | 40 | 50 |
| 1000 | - | 70 |
| 3600 | 65 | - |
| 4000 | - | 175 |
| 5000 | - | 270 |
| 6000 | - | 330 |

Example 7

Hydrophobic precipitated silica, marketed as Sipernant™ D10 (Degussa Corp., Teterboro, NJ) was used instead of fumed silica as in Example 1 to prepare AF7. Similarly, silica marketed as Aerosil™ 972 (Degussa) was used to prepare a test AF8 by the methods described in Example 1. The antifoam test results are summarized in Table 6.

TABLE 6

| Foam volumes as a function of time for 100 ppm of AF7 and AF8 in SDS. | | |
|---|---|---|
| TIME (s) | FOAM VOLUME (mL) | |
| | AF7 | AF8 |
| 10 | 55 | 100 |
| 50 | - | 405 |
| 70 | - | 560 |
| 1000 | 60 | > 900 |
| 2000 | 85 | > 900 |
| 3600 | 105 | > 900 |

Example 8

375 g of 60,000 $mm^2/s$ (cSt) polydimethylsiloxane was placed in the Hobart apparatus and heated to 70°C under nitrogen. 1.05 grams of benzoyl peroxide were then added. Thirty minutes later, 2.8 g methyl methacrylate was added. After stirring the mixture for 1 hour at 70° C, an additional 42 g of methyl methacrylate were slowly added and the mixture was stirred for 3 hours at that temperature to produce AF9, a gray elastic material.

25 g of AF9 were mixed with 40 g of 50 $mm^2/s$ (cSt) polydimethylsiloxane to form AF10 which was emulsified by the procedure described in Example 1. The foam rise data for AF10 in Table 7 indicates significant antifoam activity which is noteworthy considering AF10 contains no silica.

TABLE 7

| Foam volumes as a function of time for AF10 in SDS. | | | |
|---|---|---|---|
| TIME (s) | FOAM VOLUME (mL) | | |
| | 1200 ppm | 800 ppm | 400 ppm |
| 10 | 30 | 20 | 35 |
| 100 | 30 | 30 | 55 |
| 1000 | 155 | 260 | 700 |

Example 9

40 g of AF9 were mixed with 0.58 g of the fumed silica of Example 1 and 64 g 50 $mm^2/s$ (cSt) silicone oil to form AF11, which was then emulsified by the procedure described in Example 1. Comparison of the foam rise results in Table 8 for AF11 with those in Table 1 for AF1 indicates that a much more potent antifoam results if silica is present during the polymerization rather than if it is added following the polymerization.

TABLE 5

| TIME (s) | FOAM VOLUME (mL) |
|---|---|
| 10 | 20 |
| 100 | 70 |
| 800 | 700 |

Example 10

To the apparatus described in Example 1 were added 237.5 g of 10,000 $mm^2/s$ (cSt) silicone oil marketed by Union Carbide Corporation as L-45™, 12.5 g of pendant vinyl silicone gum stock with a viscosity of about 2,000,000 $mm^2/s$ (cSt) and a pendant vinyl content of about 0.2 wt. % which is marketed by Union Carbide as W-982, and 8.0 g of the silica of Example 1. The mixture was then heated to 80°C and stirred under nitrogen. After 1 hour, 1 g benzoyl peroxide and 16 ml of distilled methyl methacrylate were added and the mixture was stirred for an additional 3 hours. At this point the contents of the mixer were viscous and displayed significant elasticity.

400 g 50 $mm^2/s$ (cSt) L-45™ were then added and mixed in to give antifoam compound AF12, the test results for which are shown in Table 9.

TABLE 9

Foam volumes in the presence of 100 ppm antifoam AF12 results for duplicated experiments using 0.5% SDS and 0.1% of a non-ionic surfactant marketed by Union Carbide Corporation as TERGITOL™ NP-10 are shown.

| TIME (s) | FOAM VOLUME (mL) | | | |
|---|---|---|---|---|
| | SDS | | TERGITOL NP-10 | |
| 10 | 40 | 40 | 25 | 25 |
| 100 | 50 | 40 | 30 | 30 |
| 1000 | 50 | 50 | 35 | |
| 2000 | 50 | 65 | 40 | 35 |
| 4000 | | | 55 | |
| 7000 | 150 | | | |
| 12000 | | | | 105 |
| 15000 | | | | 120 |

Example 11

The preparation described in the previous Example was repeated using a series of pendant vinyl silicone oils characterized by different vinyl contents. 500,000 $mm^2/s$ (cSt) silicone oil, having no vinyl content, was used as a control. The antifoam test results are summarized in Table 10.

## TABLE 10

Foam volumes as a function of time for a series of antifoams made with different pendant vinyl silicone oils. The antifoam concentrations were 100 ppm, the surfactant was 0.5% SDS and the emulsions were prepared by the procedure described in Example 1.

| | AF13 | AF12 | AF14 | AF15 | AF16 |
|---|---|---|---|---|---|
| % Vinyl | 0 | 0.2 | 5 | 13 | 20 |
| TIME (s) | | | SDS FOAM VOLUMES (mL) | | |
| 10 | 45 | 40 | 90 | 100 | 65 |
| 100 | 160 | 50 | 710 | 720 | 300 |
| 1000 | - | 50 | - | - | - |
| 2000 | - | 50 | - | - | - |
| 7000 | - | 150 | - | - | - |

Example 12

A series of antifoam compounds were prepared based on Example 10 with varying amounts of W982 pendant vinyl silicone oil having a 02. wt. % vinyl content. Foam rise test data are summarized in Table 11.

## TABLE 11

Foam volumes as a function of time for a series of antifoams made with different concentrations of 0.2 weight percent pendant vinyl silicone oil.

| | AF17 | AF18 | AF12 | AF19 |
|---|---|---|---|---|
| Wt % | 0 | 0.93 | 1.86 | 3.72 |
| TIME (s) | | SDS FOAM VOLUMES (mL) | | |
| 10 | 30 | 20 | 40 | 50 |
| 100 | 80 | 100 | 50 | 65 |
| 1000 | 300 | 500 | 50 | 85 |
| 2000 | 365 | – | 50 | 105 |
| 3000 | – | – | – | 185 |
| 4000 | – | – | – | 375 |
| 7000 | – | – | 150 | |
| Wt. % | 0 | 0.93 | 1.86 | 3.72 |
| TIME | TERGITOL NP10 FOAM VOLUMES | | | |
| 10 | 25 | 25 | 25 | 30 |
| 100 | 35 | 80 | 30 | 30 |
| 1000 | 405 | – | 35 | 35 |
| 2000 | – | – | – | 40 |
| 3000 | – | – | 55 | |
| 4000 | – | – | 120 | |

Example 13

A series of antifoam compounds, based on the composition described in Example 10, were prepared using silicone oils with different viscosities. The results are summarized in Table 12.

## TABLE 12

Influence of silicone oil viscosity on antifoam performance. The base composition is given in Example 10. The antifoam concentrations were 100 ppm, the surfactants were 0.5% SDS and 0.1% TERGITOL NP-10.

| | AF20 | AF21 | AF12 | AF22 |
|---|---|---|---|---|
| Visc. | 350 | 1000 | 10000 | 60000 |

| TIME (s) | SDS FOAM VOLUMES (mL) | | | |
|---|---|---|---|---|
| 10 | 60 | 70 | 40 | 35 |
| 100 | 420 | 440 | 50 | 40 |
| 1000 | - | - | 50 | 45 |
| 2000 | - | - | 50 | 50 |
| 3000 | - | - | - | - |
| 4000 | - | - | - | 60 |
| 7000 | - | - | 150 | |

| TIME (s) | TERGITOL NP10 FOAM VOLUMES (mL) | | | |
|---|---|---|---|---|
| 10 | | | 25 | 20 |
| 100 | | | 30 | 20 |
| 1000 | | | 35 | 35 |
| 2000 | | | - | 60 |
| 3000 | | | - | 300 |
| 4000 | | | 55 | 675 |
| 15000 | | | 120 | - |

Example 14

The antifoam preparation described in Example 10 was repeated without methyl methacrylate (MMA) addition. Table 13 compares antifoam test results for compounds with and without vinyl monomer. Both materials are good foam control agents; however, the composition containing methyl methacrylate was superior.

## TABLE 13

Foam volumes as a function of time for antifoams made with and without methyl methacrylate. The base antifoam composition is given in Example 10. The antifoam concentrations were 100 ppm, and the surfactant was 0.5% SDS and the emulsions were prepared by the procedure described in Example 1.

| | AF23 | AF12 |
|---|---|---|
| Wt.% MMA | 0 | 2.23 |
| TIME (s) | SDS FOAM VOLUMES (mL) | |
| 10 | 65 | 40 |
| 100 | 140 | 50 |
| 1000 | 295 | 50 |
| 2000 | 500 | 50 |
| 3000 | - | - |
| 4000 | - | - |
| 7000 | - | 150 |

Example 15

The type of agitation is an important aspect of antifoam preparation. The composition described in Example 10 was repeated in a Ross Double Planetary Mixer and the resulting antifoam was a creamy white material instead of the opaque elastic material associated with durable antifoams. Table 14 compares antifoam test results - clearly the same composition when prepared in a Ross mixer was inferior. A possible explanation is that in the Ross mixer there was about a 1 cm gap between the mixing blades and the side of the bowl which was about an order of magnitude greater than in the Hobart. This in turn means the Ross mixer puts much less fluid mechanical work into the antifoam.

TABLE 14

Comparison of foam volumes as a function of time for an antifoam made in two different mixers. The antifoam composition and procedures are given in Example 10. The antifoam concentrations were 100 ppm, the surfactant was 0.5% SDS and the emulsions were prepared by the procedure described in Example 1.

| | AF24 | AF12 |
|---|---|---|
| Mixer | Ross | Hobart |
| TIME (s) | SDS FOAM VOLUMES (mL) | |
| 10 | 90 | 40 |
| 100 | 650 | 50 |
| 160 | 930 | 50 |
| 1000 | - | 50 |
| 2000 | - | 50 |
| 3000 | - | - |
| 4000 | - | - |
| 7000 | - | 150 |

Example 16

The importance of agitation during antifoam compound preparation is further demonstrated as follows. The composition described in Example 10 was repeated; however, for most of the preparation the mixer was turned off. That is, every 20 minutes the mixer was turned on for 30 s at the lowest speed setting. Antifoam test results for this material is compared to the antifoam described in Example 10 in Table 15. Clearly, less mixing results in a less durable antifoam.

## TABLE 15

Comparison of foam volumes as a function of time for an antifoam made with and without mixing. The antifoam composition and procedures are given in Example 10. The antifoam concentrations were 100 ppm, the surfactant was 0.5% SDS and the emulsions were prepared by the procedure described in Example 1.

| TIME (s) | AF25 | AF12 |
|---|---|---|
| | SDS FOAM VOLUMES (~~cc~~ mL) | |
| | NO STIRRING | NORMAL STIRRING |
| 10 | 90 | 40 |
| 100 | 540 | 50 |
| 200 | 845 | 50 |
| 1000 | - | 50 |
| 2000 | - | 50 |
| 3000 | - | 50 |
| 4000 | - | - |
| 7000 | - | 150 |

Example 17

Antifoam compound AF26 was prepared by first mixing in a Hobart 8g Tullanox™ 500, 12.5 g W982, 237.5 g of 10,000 $mm^2/s$ (cSt) silicone oil which was mixed for 1 hour at 130 °C under nitrogen followed by the addition of 1g dicumyl peroxide. After a further 3 hours mixing the compound was diluted with 400 g 50 $mm^2/s$ (cSt) L-45. Emulsions were made by the procedure described in Example 10.

AF27 and AF28 were made the same way as was AF26 except that more vinyl-substituted silicone oil was used, (25g and 18.8 g, respectively with a corresponding decrease in the amount of 10000 $mm^2/s$ (cSt) silicone oil.

AF27 and AF28 formed a rubbery mass which could not be diluted or emulsified. Antifoam test results for AF26 are given in Table 16. Although not as effective as some of the compounds containing methyl methacrylate, AF26 was very active. Dicumyl peroxide offers the advantage of better control of silicone branching. On the other hand, the high temperature needed for initiator decomposition requires pressured reactors in order to contain methyl methacrylate.

TABLE 16

Foam volumes versus time for antifoam compound AF26.

| TIME (s) | SDS | TERGITOL NP-10 |
|---|---|---|
| | FOAM VOLUMES (mL) | |
| 100 | 80 | 70 |
| 100 | 165 | 110 |
| 1200 | 245 | 150 |
| 2000 | 290 | 210 |
| 4000 | 550 | 420 |

Example 18

Antifoam compounds AF28 and AF29 were based on the same composition as AF12 in Example 10 with the following changes. AF28 was initiated with 2,4 - dichlorobenzoyl peroxide and was heated for 3 hours at 65 °C followed by 1 hour at 80 °C. AF29 was initiated with p-chlorobenzoyl peroxide for 3 hours at 80 °C followed by 1 hour at 95 °C. The compounds were diluted with 50 $mm^2/s$ (cSt) L-45 and were emulsified as described in previous examples.

Antifoam tests results for AF28 and AF29 are given in Table 17. The dichloro peroxide gave a more durable antifoam than did p-chlorobenzoyl peroxide.

TABLE 17

| Foam volumes versus time for antifoam compounds prepared with substituted peroxides. | | | | |
|---|---|---|---|---|
| TIME (s) | FOAM VOLUMES (mL) | | | |
| | AF28 | | AF29 | |
| | SDS | Tergitol NP-10 | SDS | Tergitol NP-10 |
| 10 | | 20 | 50 | 50 |
| 100 | 50 | 25 | 125 | 275 |
| 1000 | 50 | 30 | 475 | - |
| 2000 | 65 | 35 | 665 | - |
| 4000 | 90 | 40 | - | - |
| 7000 | 150 | - | - | - |

## Claims

**1.** A process for the production of a foam suppressant composition comprising

1) reacting a mixture of

a) from 80 to 98 wt.%, based upon the total weight of reactants a, b and c, of at least one polyorganosiloxane having the formula (I):

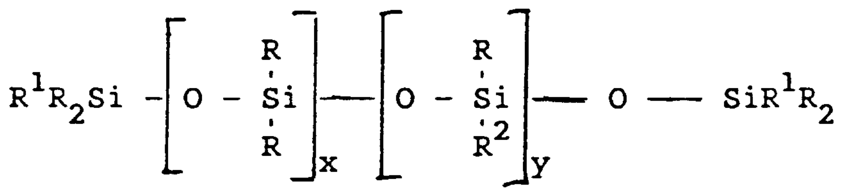 (I)

wherein R represents an alkyl group having from 1 to 6 carbon atoms; $R^1$ represents a hydrogen atom, a hydroxyl group, an alkyl group having from 1 to 16 carbon atoms, an epoxy group having from 2 to 16 carbon atoms or the group $-OR^3$ wherein $R^3$ represents an alkyl group having from 1 to 16 carbon atoms, an arylalkyl group having from 7 to 23 carbon atoms or $-OR^3$ may be a polyoxyalkylene group having a molecular weight of from 50 to 5000; $R^2$ represents an alkyl group having from 1 to 16 carbon atoms, a phenyl group, a hydrogen atom, an alkyl-substituted phenyl group wherein the alkyl group contains from 1 to 6 carbon atoms, an epoxy group having from 2 to 16 carbon atoms, or a polysiloxane group having a molecular weight of from 100 to 10,000; $y$ is an integer ranging from 0 to 10,000; and the sum of $x$, and $y$ ranges from 500 to 10,000.

b) from 0.1 to 30 wt. %, of amorphous silica based upon the total weight of reactants a, b and c; and

c) from 0.0001 to 2 wt. %, based upon the total weight of reactants a, b and c of at least on free radical initiator catalyst,

d) optionally, from 0 to 20 wt. %, based upon the total weight of reactants a, b and c of at least one vinyl monomer,

e) optionally, from 0 to 20 wt. %, based upon the total weight of reactants a, b, and c of a vinyl-modified polyorganosiloxane of the formula (II):

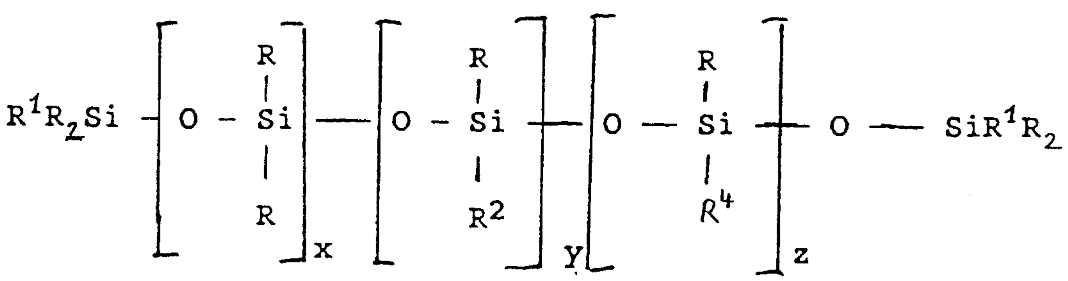 (II)

wherein R represents an alkyl group having from 1 to 6 carbon atoms; $R^1$ represents a hydrogen atom, a hydroxyl group, an alkyl group having from 1 to 16 carbon atoms, an epoxy group having from 2 to 16 carbon atoms or the group $-OR^3$ wherein $R^3$ represents an alkyl group having from 1 to 16 carbon atoms, an arylalkyl group having from 7 to 23 carbon atoms or $-OR^3$ may be a polyoxyalkylene group having a molecular weight of from 50 to 5000; $R^2$ represents an alkyl group having from 1 to 16 carbon atoms, a phenyl group, a hydrogen atom, an alkyl-substituted phenyl group wherein the alkyl group contains from 1 to 6 carbon atoms, an epoxy group having from 2 to 16 carbon atoms, or a polysiloxane group having a molecular weight of from 100 to 10,000; $R^4$ represents a vinyl group containing from 2 to 24 carbon atoms; $y$ is an integer ranging from 0 to 10,000; $z$ is an integer ranging from 1 to 400; and the sum of $x$, $y$ and $z$ ranges from 500 to 10,000;

under conditions and for a time sufficient such that free radical polymerization occurs and a polymerization product forms; and

2) diluting the polymerization product formed through the reaction of the above described materials with sufficient quantities of a polydiorganosiloxane having a viscosity of 10 to 300 $mm^2/s$ (cSt) such that a final composition having a viscosity of 100 to 10,000 $mm^2/s$ (cSt) is produced.

**2.** The process of claim 1 wherein R, $R^1$, and $R^2$ of polydiorganosiloxane (a) are methyl groups, $x$ is an integer ranging from 600 to 4000, preferably 800 to 2000, and $y$ is 0.

**3.** The process of claim 1 or 2 wherein the amorphous silica has a surface area of from 50 to 400 $m^2/g$, preferably 100 to 300 $m^2/g$, and an average particle size less than 100 µm, preferably less than 50 µm, as determined by the Hegman Gauge.

**4.** The process of any one of claims 1 to 3 wherein the amorphous silica is prehydrophobized fumed silica.

**5.** The process of any one of claims 1 to 4 wherein the silica (b) is present in amounts of from 0.1 to 10%, preferably 2 to 4%, by weight, based upon the total weight of reactants (a), (b) and (c).

**6.** The process of any one of claims 1 to 5 wherein the free radical initiator catalyst comprises benzoyl peroxide.

**7.** The process of any one of claims 1 to 6 wherein the vinyl monomer is selected from olefins, vinyl esters of aliphatic or aromatic carboxylic acids, (meth)acrylic acid, methyl (meth)acrylate, ethyl (meth)-acrylate, propyl or isopropyl (meth)acrylate, n-butyl, iso-butyl or tert.-butyl (meth)acrylate, 2-ethyl-hexyl-(meth)acrylate, (meth)acrylamide, N-alkyl-substituted (meth)acrylamide derivatives, (meth)acrylonitrile, maleic anhydride, maleic acid amide, N-alkyl-maleimide, maleic acid half esters or diesters, vinyl aromatics, vinyl chloride, vinylidene chloride, vinylidene fluoride, tetrafluoroethylene, vinyl ethers, allyl compounds and mixtures thereof.

**8.** The process of claim 7 wherein the vinyl monomer is selected from vinyl acetate and methyl methacrylate.

**9.** The process of any one of claims 1 to 8 wherein the vinyl-modified polyorganosiloxane (e) is present in amounts of from 2 to 10 wt. %, preferably about 5 wt. %, based upon the total weight of reactants (a), (b) and (c).

**10.** The process of any one of claims 1 to 9 wherein R and $R^1$ of polydiorganosiloxane (e) are methyl groups and x is an integer ranging from 5000 to 10000, preferably 3000 to 8000 and, more preferably, 6000 to 8000, y is 0 and z is an integer ranging from 5 to 25, preferably from 5 to 20 and, more preferably, has a value of about 14.

**11.** A foam suppressant composition comprising the product of the process of any one of claims 1 to 10.

**12.** A process for suppressing foam, or the formation of foam, in a liquid medium comprising adding the composition of claim 11 to said medium in quantities sufficient to suppress said foam or said formation of foam.

## Patentansprüche

**1.** Verfahren zur Herstellung einer schaumunterdrückenden Zusammensetzung, welches umfaßt

1) Umsetzung einer Mischung von

a) 80 bis 98 Gew.-%, bezogen auf das Gesamtgewicht der Reaktanten a, b und c, wenigstens eines Polyorganosiloxans mit der Formel (I):

$$R^1R_2Si - \left[ O - \underset{R}{\overset{R}{Si}} \right]_x - \left[ O - \underset{R^2}{\overset{R}{Si}} \right]_y - O - SiR^1R_2 \quad (I)$$

worin R für eine Alkylgruppe mit 1 bis 6 Kohlenstoffatomen steht; $R^1$ ein Wasserstoffatom, eine Hydroxylgruppe, eine Alkylgruppe mit 1 bis 16 Kohlenstoffatomen, eine Epoxygruppe mit 2 bis 16 Kohlenstoffatomen oder die Gruppe $-OR^3$, worin $R^3$ für eine Alkylgruppe mit 1 bis 16 Kohlenstoffatomen, eine Arylalkylgruppe mit 7 bis 23 Kohlenstoffatomen steht oder $-OR^3$ eine Polyoxyalky-

lengruppe mit einem Molekulargewicht von 50 bis 5000 sein kann, darstellt; $R^2$ eine Alkylgruppe mit 1 bis 16 Kohlenstoffatomen, eine Phenylgruppe, ein Wasserstoffatom, eine Alkyl-substituierte Phenylgruppe, in welcher die Alkylgruppe 1 bis 6 Kohlenstoffatome enthält, eine Epoxygruppe mit 2 bis 16 Kohlenstoffatomen, oder eine Polysiloxangruppe mit einem Molekulargewicht von 100 bis 10000 repräsentiert; y eine ganze Zahl im Bereich von 0 bis 10000 ist; und die Summe von x und y im Bereich von 500 bis 10000 liegt;

b) 0,1 bis 30 Gew.-% amorpher Kieselsäure, bezogen auf das Gesamtgewicht der Reaktanten a, b und c; und

c) 0,0001 bis 2 Gew.-%, bezogen auf das Gesamtgewicht der Reaktanten a, b und c, wenigstens eines freien Radikal-Initiator-Katalysators,

d) gegebenenfalls 0 bis 20 Gew.-%, bezogen auf das Gesamtgewicht der Reaktanten a, b und c, wenigstens eines Vinylmonomeren,

e) gegebenenfalls 0 bis 20 Gew.-%, bezogen auf das Gesamtgewicht der Reaktanten a, b und c, eines Vinyl-modifizierten Polyorganosiloxans der Formel (II):

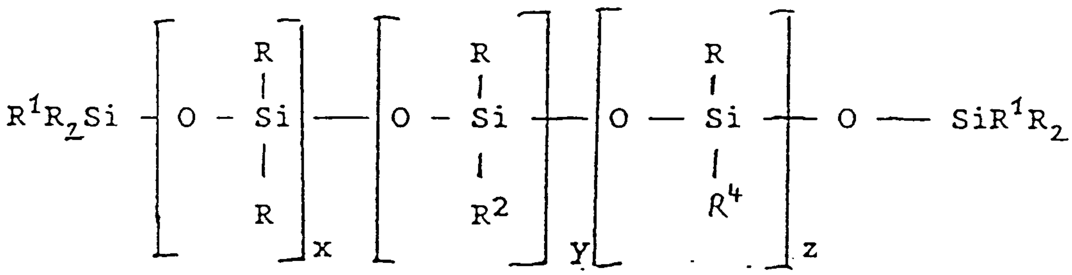
(II)

worin R für eine Alkylgruppe mit 1 bis 6 Kohlenstoffatomen steht; $R^1$ ein Wasserstoffatom, eine Hydroxylgruppe, eine Alkylgruppe mit 1 bis 16 Kohlenstoffatomen, eine Epoxygruppe mit 2 bis 16 Kohlenstoffatomen oder die Gruppe $-OR^3$, worin $R^3$ für eine Alkylgruppe mit 1 bis 16 Kohlenstoffatomen, eine Arylalkylgruppe mit 7 bis 23 Kohlenstoffatomen steht oder $-OR^3$ eine Polyoxyalkylengruppe mit einem Molekulargewicht von 50 bis 5000 sein kann, darstellt; $R^2$ eine Alkylgruppe mit 1 bis 16 Kohlenstoffatomen, eine Phenylgruppe, ein Wasserstoffatom, eine Alkyl-substituierte Phenylgruppe, in welcher die Alkylgruppe 1 bis 6 Kohlenstoffatome enthält, eine Epoxygruppe mit 2 bis 16 Kohlenstoffatomen oder eine Polysiloxangruppe mit einem Molekulargewicht von 100 bis 10000 repräsentiert; $R^4$ eine Vinylgruppe, die 2 bis 24 Kohlenstoffatome enthält, bedeutet; y eine ganze Zahl im Bereich von 0 bis 10000 ist; z eine ganze Zahl im Bereich von 1 bis 400 ist; und die Summe von x, y und z im Bereich von 500 bis 10000 liegt;

unter solchen Bedingungen und für eine ausreichende Zeit, daß eine freie Radikal-Polymerisation auftritt und sich ein Polymerisationsprodukt bildet; und

2) Verdünnen des durch die Reaktion der oben beschriebenen Materialien gebildeten Produkts mit ausreichenden Mengen eines Polydiorganosiloxans mit einer Viskosität von 10 bis 300 $mm^2/s$ (cSt), daß eine endgültige Zusammensetzung mit einer Viskosität von 100 bis 10000 $mm^2/s$ (cSt) hergestellt wird.

**2.** Verfahren nach Anspruch 1, worin R, $R^1$ und $R^2$ von Polydiorganosiloxan (a) Methylgruppen sind, x eine ganze Zahl im Bereich von 600 bis 4000, vorzugsweise 800 bis 2000, ist und y 0 ist.

**3.** Verfahren nach Anspruch 1 oder 2, in welchem die amorphe Kieselsäure eine Oberfläche von 50 bis 400 $m^2/g$, vorzugsweise 100 bis 300 $m^2/g$, und eine durchschnittliche Teilchengröße unter 100 $\mu m$, vorzugsweise unter 50 $\mu m$, wie durch das Hegman-Meßgerät bestimmt, aufweist.

**4.** Verfahren nach irgendeinem der Ansprüche 1 bis 3, in welchem die amorphe Kieselsäure vorhydrophobisierte pyrogene Kieselsäure ist.

**5.** Verfahren nach irgendeinem der Ansprüche 1 bis 4, in welchem die Kieselsäure (b) in Mengen von 0,1 bis 10, vorzugsweise 2 bis 4 Gew.-%, bezogen auf das Gesamtgewicht der Reaktanten (a), (b) und (c), anwesend ist.

6. Verfahren nach irgendeinem der Ansprüche 1 bis 5, in welchem der freie Radikal-Initiator-Katalysator Benzoylperoxid umfaßt.

7. Verfahren nach irgendeinem der Ansprüche 1 bis 6, in welchem das Vinylmonomere ausgewählt ist aus Olefinen, Vinylestern von aliphatischen oder aromatischen Carbonsäuren, (Meth)acrylsäure, Methyl(meth)acrylat, Ethyl(meth)acrylat, Propyl- oder Isopropyl(meth)acrylat, n-Butyl-, iso-Butyl- oder tert.-Butyl(meth)acrylat, 2-Ethylhexyl(meth)acrylat, (Meth)acrylamid, N-Alkyl-substituierten (Meth)acrylamid-Derivaten, (Meth)acrylnitril, Maleinsäureanhydrid, Maleinsäureamid, N-Alkylmaleimid, Maleinsäurehalbestern oder -diestern, vinylaromatischen Verbindungen, Vinylchlorid, Vinylidenchlorid, Vinylidenfluorid, Tetrafluorethylen, Vinylethern, Allylverbindungen und Mischungen davon.

8. Verfahren nach Anspruch 7, in welchem das Vinylmonomere aus Vinylacetat und Methylmethacrylat ausgewählt wird.

9. Verfahren nach irgendeinem der Ansprüche 1 bis 8, in welchem das Vinyl-modifizierte Polyorganosiloxan (e) in Mengen von 2 bis 10, vorzugsweise ungefähr 5 Gew.-%, bezogen auf das Gesamtgewicht der Reaktanten (a), (b) und (c), anwesend ist.

10. Verfahren nach irgendeinem der Ansprüche 1 bis 9, in welchem R und $R^1$ von Polydiorganosiloxan (e) Methylgruppen sind und x eine ganze Zahl im Bereich von 5000 bis 10000, vorzugsweise 3000 bis 8000 und, roch bevorzugter, 6000 bis 8000, ist, y 0 ist und z eine ganze Zahl im Bereich von 5 bis 25, vorzugsweise 5 bis 20, ist und noch bevorzugter einen Wert von etwa 14 aufweist.

11. Schaumunterdrückende Zusammensetzung, umfassend das Produkt des Verfahrens von irgendeinem der Ansprüche 1 bis 10.

12. Verfahren zur Unterdrückung von Schaum oder der Bildung von Schaum in einem flüssigen Medium, umfassend die Zugabe der Zusammensetzung von Anspruch 11 zu dem Medium in Mengen, die ausreichen, den Schaum oder die Schaumbildung zu unterdrücken.

## Revendications

1. Procédé de production d'une composition supprimant une mousse, comprenant
   1) la réaction d'un mélange
      a) de 80 à 98 % en poids, sur la base du poids total des corps réactionnels a, b et c, d'au moins un polyorganosiloxane répondant à la formule (I) :

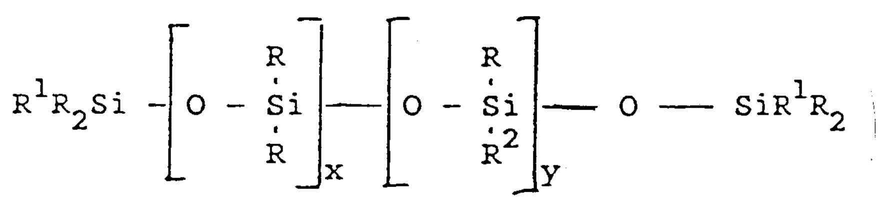

(I)

dans laquelle R représente un groupe alkyle ayant 1 à 6 atomes de carbone ; $R^1$ représente un atome d'hydrogène, un groupe hydroxyle, un groupe alkyle ayant 1 à 16 atomes de carbone, un groupe époxy ayant 2 à 16 atomes de carbone ou le groupe $-OR^3$ dans lequel $R^3$ représente un groupe alkyle ayant 1 à 16 atomes de carbone, un groupe arylalkyle ayant 7 à 23 atomes de carbone, ou bien le groupe $-OR^3$ peut être un groupe polyoxyalkylène ayant un poids moléculaire de 50 à 5000, $R^2$ représente un groupe alkyle ayant 1 à 16 atomes de carbone, un groupe phényle, un atome d'hydrogène, un groupe phényle à substituant alkyle dont le groupe alkyle contient 1 à 6 atomes de carbone, un groupe époxy ayant 2 à 16 atomes de carbone ou un groupe polysiloxane ayant un poids moléculaire de 100 à 10 000 ; y est un nombre entier ayant une valeur de 0 à 10 000 ; et la somme de x et y a une valeur de 500 à 10 000,

b) de 0,1 à 30 % en poids de silice amorphe sur la base du poids total des corps réactionnels a, b et c ; et

c) de 0,0001 à 2 % en poids, sur la base du poids total des corps réactionnels a, b et c, d'au moins un catalyseur initiateur de radicaux libres,
d) à titre facultatif, de 0 à 20 % en poids, sur la base du poids total des corps réactionnels a, b et c, d'au moins un monomère vinylique,
e) à titre facultatif, de 0 à 20 % en poids, sur la base du poids total des corps réactionnels a, b et c, d'un polyorganosiloxane modifié par un groupe vinyle de formule (II) :

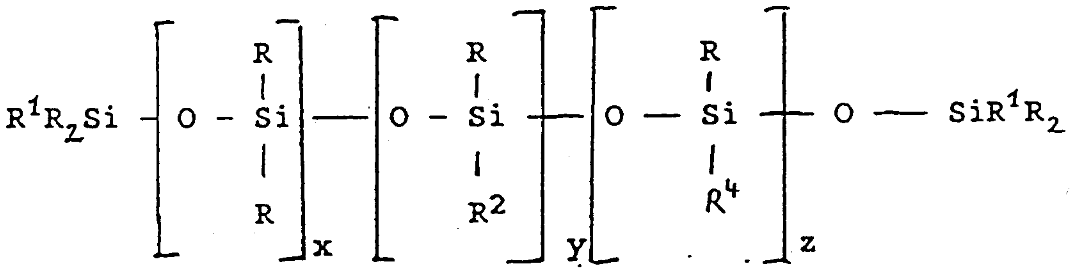
(II)

dans laquelle R représente un groupe alkyle ayant 1 à 6 atomes de carbone ; $R^1$ représente un atome d'hydrogène, un groupe hydroxyle, un groupe alkyle ayant 1 à 16 atomes de carbone, un groupe époxy ayant 2 à 16 atomes de carbone ou le groupe $-OR^3$ dans lequel $R^3$ représente un groupe alkyle ayant 1 à 16 atomes de carbone, un groupe arylalkyle ayant 7 à 23 atomes de carbone ou bien le groupe $-OR^3$ peut être un groupe polyoxyalkylène ayant un poids moléculaire de 50 à 5000 ; $R^2$ représente un groupe alkyle ayant 1 à 16 atomes de carbone, un groupe phényle, un atome d'hydrogène, un groupe phényle à substituant alkyle dont le groupe alkyle contient 1 à 6 atomes de carbone, un groupe époxy ayant 2 à 16 atomes de carbone ou un groupe polysiloxane ayant un poids moléculaire de 100 à 10 000 ; $R^4$ représente un groupe vinyle contenant 2 à 24 atomes de carbone ; $\underline{y}$ est un nombre entier ayant une valeur de 0 à 10 000 ; $\underline{z}$ est un nombre entier ayant une valeur de 1 à 400 ; et la somme de $\underline{x}$, $\underline{y}$ et $\underline{z}$ a une valeur allant de 500 à 10 000 ;

dans des conditions et pendant une durée suffisantes pour que la polymérisation par radicaux libres ait lieu et qu'un produit de polymérisation se forme ; et
2) la dilution du produit de polymérisation formée par la réaction des matières décrites ci-dessus avec des quantités suffisantes d'un polydiorganosiloxane ayant une viscosité de 10 à 300 $mm^2/s$ (cSt) pour produire une composition finale ayant une viscosité de 100 à 10 000 $mm^2/s$ (cSt).

**2.** Procédé suivant la revendication 1, dans lequel R, $R^1$ et $R^2$ du polydiorganosiloxane (a) sont des groupes méthyle, $\underline{x}$ est un nombre entier allant de 600 à 4000, de préférence de 800 à 2000, et $\underline{y}$ est égal à 0.

**3.** Procédé suivant la revendication 1 ou 2, dans lequel la silice amorphe a une surface spécifique de 50 à 400 $m^2/g$, de préférence de 100 à 300 $m^2/g$ et un diamètre moyen des particules inférieur à 100 $\mu m$, de préférence inférieur à 50 $\mu m$, comme déterminé par l'appareil de mesure Hegman.

**4.** Procédé suivant l'une quelconque des revendications 1 à 3, dans lequel la silice amorphe est de la silice en particules impalpables préalablement rendue hydrophobe.

**5.** Procédé suivant l'une quelconque des revendications 1 à 4, dans lequel la silice (b) est présente en quantités de 0,1 à 10 %, de préférence de 2 à 4 %, en poids, sur la base du poids total des corps réactionnels (a), (b) et (c).

**6.** Procédé suivant l'une quelconque des revendications 1 à 5, dans lequel le catalyseur initiateur de radicaux libres comprend du peroxyde de benzoyle.

**7.** Procédé suivant l'une quelconque des revendications 1 à 6, dans lequel le monomère vinylique est choisi entre des oléfines, des esters de vinyle d'acides carboxyliques aliphatiques ou aromatiques, l'acide (méth)acrylique, le (méth)acrylate de méthyle, le (méth)acrylate d'éthyle, le (méth)acrylate de propyle ou d'isopropyle, le (méth)acrylate de n-butyle, d'isobutyle ou de tertio-butyle, le (méth)acrylate

de 2-éthylhexyle, le (méth)acrylamide, des dérivés de (méth)acrylamide à substituant alkyle sur l'azote, le (méth)acrylonitrile, l'anhydride maléique, l'amide d'acide maléique, un N-alkylmaléimide, des demi-esters ou des diesters d'acide maléique, des composés vinyl-aromatiques, le chlorure de vinyle, le chlorure de vinylidène, le fluorure de vinylidène, le tétrafluoréthylène, des éthers de vinyle, des composés allyliques et des mélanges de ces monomères.

**8.** Procédé suivant la revendication 7, dans lequel le monomère vinylique est choisi entre l'acétate de vinyle et le méthacrylate de méthyle.

**9.** Procédé suivant l'une quelconque des revendications 1 à 8, dans lequel le polyorganosiloxane (e) modifié par un groupe vinyle est présent en quantités de 2 à 10 % en poids, de préférence d'environ 5 % en poids sur la base du poids total des corps réactionnels (a), (b) et (c).

**10.** Procédé suivant l'une quelconque des revendications 1 à 9, dans lequel R et $R^1$ du polydiorganosiloxane (e) sont des groupes méthyle et x est un nombre entier ayant une valeur de 5000 à 10 000, de préférence de 3000 à 8000 et notamment de 6000 à 8000, y est égal à 0 et z est un nombre entier ayant une valeur de 5 à 25, de préférence de 5 à 20 et notamment une valeur d'environ 14.

**11.** Composition supprimant une mousse, comprenant le produit du procédé suivant l'une quelconque des revendications 1 à 10.

**12.** Procédé supprimant une mousse ou la formation d'une mousse, dans un milieu liquide, consistant à ajouter la composition suivant la revendication 11 audit milieu en quantités suffisantes pour supprimer ladite mousse ou ladite formation de mousse.